# EUROPEAN PATENT SPECIFICATION

(11) **EP 3 057 022 B1**
(45) Date of publication and mention of the grant of the patent: **28.08.2019**
(21) Application number: 15852009.8
(22) Date of filing: 06.03.2015
(51) Int. Cl.: G06F 21/14, G06F 21/72

(54) **MOBILE DEVICE AND METHOD FOR OPERATING SAME**
MOBILE VORRICHTUNG UND VERFAHREN ZUM BETRIEB DAVON
DISPOSITIF MOBILE ET PROCÉDÉ POUR SON EXPLOITATION

(30) Priority: 23.10.2014 KR 20140144320; 08.01.2015 KR 20150002944
(43) Date of publication of application: 17.08.2016
(73) Proprietor: Soongsil University Research Consortium Techno-Park, Seoul 156-743 (KR)
(72) Inventor: YI, Jeong Hyun, Gyeonggi-do 463-730 (KR); PARK, Yong Jin, Seoul 143-827 (KR)
(74) Representative: Roos, Peter
(86) International application number: PCT/KR2015/002207
(87) International publication number: WO 2016/064044

(56) References cited:
- EP-A2- 1 821 201
- WO-A2-01/76129
- WO-A2-01/86432
- JP-A- 2008 527 905
- KR-A- 20120 002 079
- KR-A- 20140 089 321
- KR-B1- 101 223 981

## Description

### [Technical Field]

The present invention relates to a mobile device and a driving method thereof. More particularly, the present invention relates to a mobile device capable of protecting core codes of a mobile application program, and a driving method thereof.

### [Background Art]

Many smart phone users use a phone banking service, but phone banking security is still vulnerable since a smart phone is connected to Internet corresponding to a public network. Information stored in the smart phone may be stolen by hackers entering through the Internet, and is not also free from attacks such as malicious codes, phishing, etc. Particularly, user's financial information may be captured through any forged banking application.

Games and SNS applications as well as financial applications giving the phone banking service are also vulnerable to the security.

Actually, there was an accident that personal information leaked out through Trojan horse virus inserted into a forged application of a famous game application, and another accident that a forged application of an SNS application illegally charged fees.

To prevent application forgery and to ensure integrity, researches on application forgery preventing solution have been undertaken. Generally, a code obfuscation technique and debugging technique have been used to lower possibilities of reverse engineering and forgery.

However, a known forgery detection technology in which a code for detecting the forgery is executed at an application program level is not secure from forgery attacks because the a structure of the application may be easily analyzed. Particularly, the structure of the application program can be analyzed if a Dalvik bite code which is executed in a Dalvik virtual machine of an Android mobile system is extracted. That is, it is possible to bypass and avoid the forgery detection technology for the application program. Therefore, another forgery detection technology of a platform level is required, not the application program level.

Some known technologies protect core codes of the mobile application program by deliberately obfuscating them. In those technologies, the obfuscation is implemented by storing separated files in a server under an Internet environment.

However, under the variable Internet environment, a connection between the smart phone and the server may be quite unstable and thus those technologies may be not executed in any cases.

Besides, if data consumption is excessive, those technologies can't be used.

The background art of the present invention is disclosed in the Korean Patent No. 10-1328012 on November 13, 2013. EP1821201 also discloses relevant prior art.

### [Disclosure]

### [Technical Problem]

The present invention has been made in an effort to provide a mobile device capable of protecting core codes of a mobile application program which is vulnerable to forgery attacks, and a driving method thereof. In the device, the core codes are executed by a coprocessor which is separately provided from a main processor, thereby being protected against the forgery attacks.

### [Technical Solution]

An exemplary embodiment of the present invention provides a mobile device including: a main processor that executes general codes of a mobile application program; a coprocessor that executes core codes of the mobile application program; and a coprocessor driver that is connected between the main processor and the coprocessor to enable communication therebetween. The general codes may include commands executable at the main processor, and the core codes may include commands executable at the coprocessor.

Another exemplary embodiment of the present invention provides a driving method of a mobile device which includes a main processor, a coprocessor, and a coprocessor driver enabling communication between the main processor and the coprocessor. The driving method of the mobile device may include: a step in which the main processor calls core codes of a mobile application program, which comprise commands executable at the coprocessor; a step in which the coprocessor driver receives a core code calling message from the main processor and transmits the core code calling message to the coprocessor; a step in which the coprocessor transmits a core code execution result to the coprocessor driver after executing the core codes; and a step in which the coprocessor driver transmits the core code execution result to the main processor.

### [Advantageous Effects]

According to the present invention, when a mobile application program is installed, core codes are separated from the mobile application program at a lower level than an operating system, and installed on an additionally provided core code storage which a main processor and general codes can't directly access, thereby preventing the core codes from being exposed and increasing resistance for reverse engineering.

In addition, since the core codes are executed at a coprocessor of the mobile device not to be exposed to the main processor of the mobile device, dynamic analysis using a CPU (central processing unit) can be prevented, and thus the resistance for reverse engineering is increased.

In addition, a network is not required due to the coprocessor, and therefore the present invention can be further optimized to a mobile environment. Further, the core codes are developed to be suitable for the coprocessor of the mobile device, so that groups or schemes of commands for the separated core codes are changed and thus the resistance for reverse engineering analysis is increased.

In addition, since the main processor and coprocessor of the mobile device share the shared memory, so that the resistance for reverse engineering is increased.

In addition, the mobile application program doesn't require an additional process for distributing the separated core codes, and distributes them through a conventional distribution process. Accordingly, a user can't perceive a difference before and after separating the core codes, and therefore a technology of the prevent invention can be used without user's repulsion.

### [Description of Drawings]

FIG. 1 shows an example of classification for codes of a mobile application program according to an exemplary embodiment of the present invention.
FIG. 2 is a block diagram showing a detailed structure of a mobile device according to the exemplary embodiment of the present invention.
FIG. 3 is a block diagram showing a detailed structure of a main processor shown in FIG. 2.
FIG. 4 is a block diagram showing a detailed structure of a coprocessor shown in FIG. 2.
FIG. 5 is a flow chart showing an operation of the mobile device according to the exemplary embodiment of the present invention.

### [Best Mode]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive, and like reference numerals designate like elements throughout the specification.

Throughout this specification and the claims that follow, unless explicitly described to the contrary, the word "comprise" and variations such as "comprises" or "comprising" will be understood to imply the inclusion of stated elements but not the exclusion of any other elements.

In addition, the terms "-er", "-or", "module", and "block" described in the specification mean units for processing at least one function and operation and can be implemented by hardware components or software components and combinations thereof.

Hereinafter, a mobile device and a driving method thereof according to an exemplary embodiment of the present invention will be described in detail with reference to the accompanying drawings.

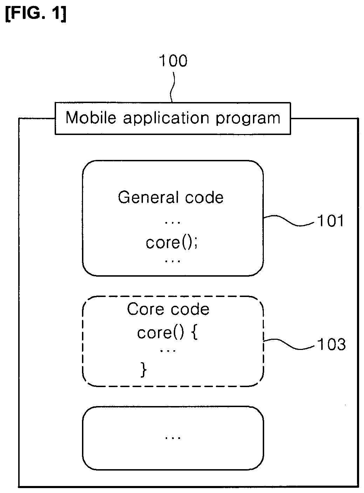

FIG. 1 shows an example of classification for codes of a mobile application program according to an exemplary embodiment of the present invention.

In FIG. 1, the mobile application program is an executable application program installed on a mobile device. For example, apps running on a smart phone are included in the mobile application program. A user can install the apps on the mobile device such as the smart phone by downloading them from a mobile application market which is a virtual market where mobile contents may be freely bought and sold.

The mobile device is a terminal capable of installing and executing the mobile application program, and a smart phone, a smart pad, a mobile phone, a notebook computer, a tablet PC, a PDA (personal digital assistant), etc. may be used as the mobile device. In particular, in the case of the smart phone or smart pad, the application program may be installed on the device as an application.

The mobile application program comprises a core code file including core codes which should be protected against forgery, and a general code file including general codes which remain after the core codes are eliminated.

The core codes may be determined by using a function previously defined at a mobile platform. Otherwise, the core codes may be directly determined by a user, a developer of the corresponding application program, or a person involved with certification of the corresponding application program.

When the application program is executed, the core codes can't be omitted and have to be necessarily executed one or more. In other words, parts of which execution order is not modified by various conditions such as a branching statement and condition statement may be selected as the core codes.

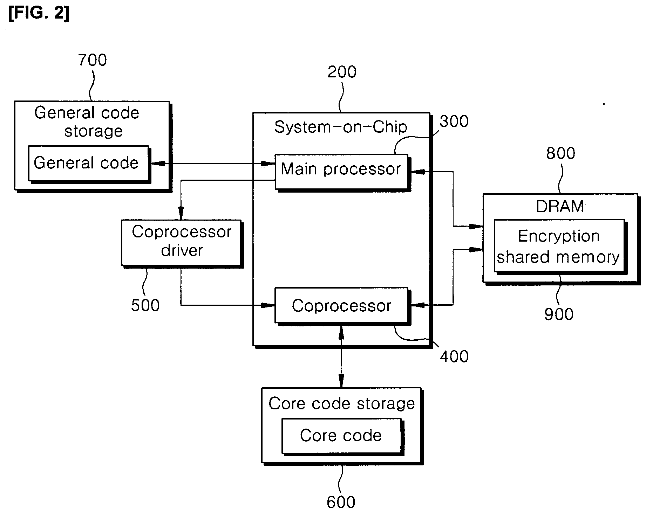

With a code obfuscation technique, the mobile device can protect the core codes which may be relatively easily exposed due to weakness a packaging of the mobile application program. In this case, the code obfuscation is separately applied to a main processor and a coprocessor to impede reverse engineering attacks. A structure of such a mobile device will be described below with reference to FIG. 2 to FIG. 5 in detail.

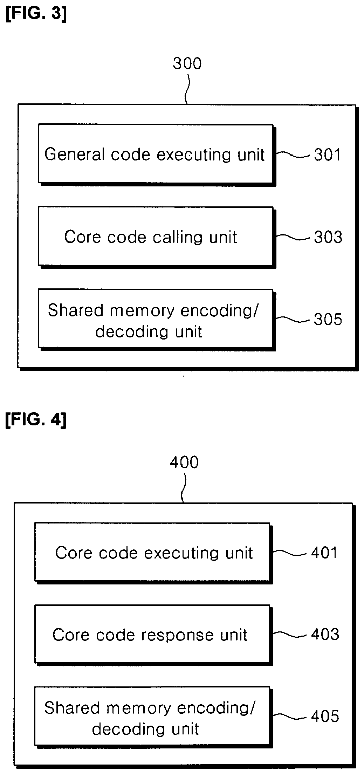

FIG. 2 is a block diagram showing a detailed structure of a mobile device according to the exemplary embodiment of the present invention, FIG. 3 is a block diagram showing a detailed structure of a main processor shown in FIG. 2, and FIG. 4 is a block diagram showing a detailed structure of a coprocessor shown in FIG. 2.

Referring to FIG. 2, the mobile device includes a system-on-chip 200, a main processor 300, a coprocessor 400, a coprocessor driver 500, a core code storage 600, a general code storage 700, a DRAM (dynamic random access memory) 800, and an encryption shared memory 900.

The system-on-chip 200 includes the main processor 300 and the coprocessor 400. The main processor 300 performs data-processing and - calculating tasks in response to a mobile application program command. The main processor 300 executes the general codes of the mobile application program. The general codes are comprised of commands executable at the main processor 300.

Referring to FIG. 3, the main processor 300 includes a general code executing unit 301, a core code calling unit (Stub) 303, and a shared memory encoding/decoding unit 305.

The general code executing unit 301 executes the general codes of the mobile application program.

The core code calling unit 303 calls the core codes when the general codes are executed, and transmits call information to the coprocessor driver 500. In addition, the core code calling unit 303 receives a core code execution result from the coprocessor 400 through the coprocessor driver 500.

The shared memory encoding/decoding unit 305 writes execution codes which have been executed by the general code executing unit 301 in the encryption shared memory 900 as an encoded format. In addition, the shared memory encoding/decoding unit 305 decodes the encoded execution codes of the coprocessor 400, which have been written in the encryption shared memory 900, and refers to the decoded execution codes.

Referring to FIG. 2 again, the coprocessor 400 communicates with the main processor 300 through the coprocessor driver 500. The coprocessor 400 performs a predetermined calculation in response to a call of the main processor 300.

The coprocessor 400 executes the core codes of the mobile application program. The core codes are comprised of commands executable at the coprocessor 400.

Referring to FIG. 4, the coprocessor 400 includes a core code executing unit 401, a core code response unit 403, and a shared memory encoding/decoding unit 405.

The core code executing unit 401 loads the core codes from the core code storage 600, and then executes the loaded core codes.

The core code response unit (Skeleton) 403 receives a core code calling message from the main processor 300 through the coprocessor driver 500, and transmits a core code execution result of the core code executing unit 401 to the coprocessor driver 500.

The shared memory encoding/decoding unit 405 decodes the encoded execution codes of the main processor 300, which have been written in the encryption shared memory 900, and refers to the decoded execution codes. In addition, while the core codes are executed, the shared memory encoding/decoding unit 405 writes execution codes of the core codes in the encryption shared memory 900 as an encoded format.

Referring to FIG. 2 again, the coprocessor driver 500 is connected between the main processor 300 and the coprocessor 400 to enable communication therebetween.

If receiving a core code calling message from the main processor 300, the coprocessor driver 500 transmits the core code calling message to the coprocessor 400. Further, the coprocessor driver 500 receives a core code execution result from the coprocessor 400, and transmits it to the main processor 300.

The core code storage 600 stores the core codes, and only the coprocessor 400 can access the core code storage 600. When the mobile application program is installed, the core codes separated from the mobile application program are stored in the core code storage 600.

The general code storage 700 stores the general codes of the mobile application program.

The DRAM 800 includes the encryption shared memory 900. The encryption shared memory 900 encodes the execution codes of the main processor 300 or data of the coprocessor 400. In addition, the DRAM 800 makes the main processor 300 and coprocessor 400 share the encoded data with each other.

An operation of the mobile device will be described below with reference to the structure described above.

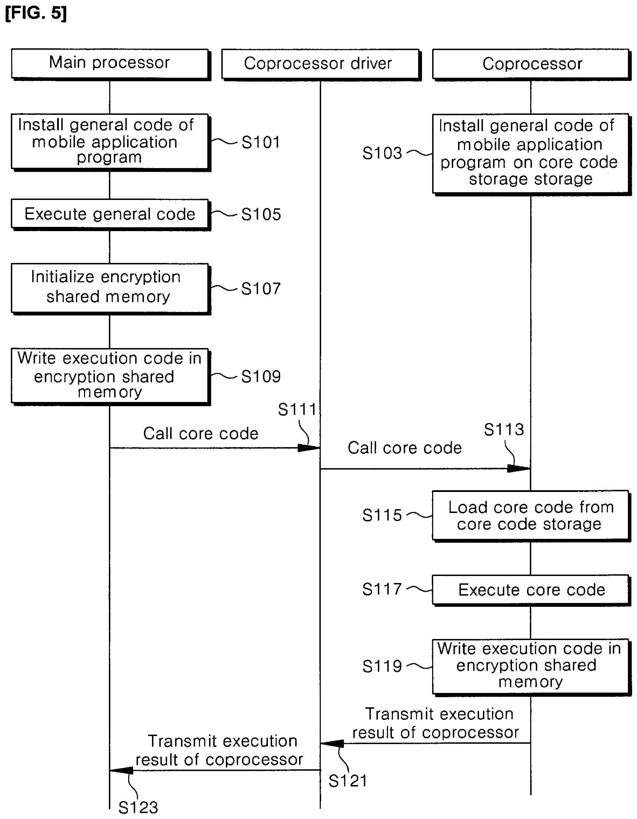

FIG. 5 is a flow chart showing the operation of the mobile device according to the exemplary embodiment of the present invention.

Referring to FIG. 5, the main processor 300 installs the general codes of the mobile application program at step S101.

The coprocessor 400 installs the core codes of the mobile application program on the core code storage 600 at step S103.

As described above, when the mobile application program is installed on the mobile device by using the coprocessor, the general codes and core codes are separately installed. Particularly, the core codes are installed on the core code storage not permitting access of the general codes and the main processor, and executed by the coprocessor.

Next, if receiving the core code calling message during the step S105 in which the general codes are executed, the main processor 300 initializes the encryption shared memory 900 at step S107. Then, if necessary, the main processor 300 writes data in the encryption shared memory 900 at step S109. In other words, if receiving the core code calling message (Stub) while the general codes of the mobile application program are executed, the main processor 300 initializes the encryption shared memory 900, and, if necessary, encodes the data.

The main processor 300 transmits the core code calling message to the coprocessor driver 500 at step S111, and the coprocessor driver 500 transmits the core code calling message to the coprocessor 400 at step S113. That is, the main processor 300 communicates with the coprocessor 400 by transmitting the core code calling message to the coprocessor driver 500.

The coprocessor 400 loads the core codes from the core code storage 600 and then executed the loaded core codes at step S117.

The coprocessor 400 writes the data in the encryption shared memory 900 at step S119.

After completing the execution of the core codes, the coprocessor 400 transmits an execution result of the core codes to the coprocessor driver 500 at step S121.

Then, the coprocessor driver 500 transmits the execution result of the core codes to the main processor at step S123. Accordingly, the coprocessor 400 communicates with the main processor 300 by transmitting the core code execution result the coprocessor driver 500.

As described above, the general codes are executed only by the main processor 300, and the core codes separated from the mobile application program are executed only by the coprocessor 400 not to be exposed to the main processor 300 when they are executed. Further, since the encryption shared memory 900 between the main processor 300 and coprocessor 400 is encoded, the reverse engineering attack becomes difficult.

The exemplary embodiments of the present invention are not implemented only by the aforementioned method and/or apparatus, but may be implemented by a program for realizing a function corresponding to a construction according to an exemplary embodiment of the present invention or a recording medium on which the program has been recorded. Such an implementation will be evident to those skilled in the art to which the present invention pertains from the embodiments.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A mobile device, comprising:
a main processor (300) that executes general codes of a mobile application program;
a coprocessor (400) that executes core codes of the mobile application program; and
a coprocessor driver (500) that is connected between the main processor (300) and the coprocessor (400) to enable communication therebetween,
wherein the general codes include commands executable at the main processor (300), and
wherein the core codes include commands executable at the coprocessor (400),
**characterized in that** the mobile device further comprises
a core code storage (600) that stores the core codes and merely permits an access of the coprocessor (400),
wherein the coprocessor (400) stores the core codes separated from the mobile application program in the core code storage (600) when the mobile application program is installed.

2. The mobile device of claim 1, on receiving a core code calling message from the main processor (300), wherein the coprocessor driver (500) transmits the core code calling message to the coprocessor (400), receives a core code execution result from the coprocessor (400), and then transmits the received core code execution result to the main processor (300).

3. The mobile device of claim 2, wherein the coprocessor (400) loads the core codes from the core code storage (600) when the core code calling message is transmitted thereto from the coprocessor driver (500), and then executes the loaded core codes.

4. The mobile device of claim 3, further comprising
an encryption shared memory (900) that encodes data and shares the encoded data,
wherein the main processor (300) writes data of the general codes in the encryption shared memory (900) as an encoded format if the core code calling message is transmitted thereto while the general codes are executed, and
wherein the coprocessor (400) decodes the encoded data written in the encryption shared memory (900), and refers to the decoded data.

5. The mobile device of claim 4, wherein the coprocessor (400) writes data of the core codes in the encryption shared memory (900) as an encoded format while the core codes are executed, and
wherein the main processor (300) decodes the encoded data written in the encryption shared memory (900), and refers to the decoded data.

6. The mobile device of claim 1, wherein the core codes are selected by a user or by using a function previously defined at a mobile platform.

7. A driving method of a mobile device which includes a main processor (300), a coprocessor (400), and a coprocessor driver (500) enabling communication between the main processor (300) and the coprocessor (400), comprising:
a step in which the main processor (300) calls (S111) core codes of an mobile application program, which comprise commands executable at the coprocessor (400);
a step in which the coprocessor driver (500) receives (S111) a core code calling message from the main processor (300) and transmits (S113) the core code calling message to the coprocessor (400);
a step in which the coprocessor (400) transmits (S121) a core code execution result to the coprocessor driver (500) after executing (S117) the core codes;and
a step in which the coprocessor driver (500) transmits (S123) the core code execution result to the main processor (300),
**characterized in that** the driving method further comprises, before the step of calling the core codes,
a step in which the coprocessor (400) stores (S103) the core codes separated from the mobile application program in a core code storage (600) when the mobile application program is installed.

8. The driving method of claim 7, wherein the step of calling the core codes includes:
a step in which the main processor (300) executes (S105) general codes of the mobile application program, which comprise commands executable at the main processor (300); and
a step in which the main processor (300) transmits (S111) a core code calling message to the coprocessor driver (500) when the core codes are determined to be called.

9. The driving method of claim 8, further comprising:
a step in which the main processor (300) writes (S109) data of the general codes in the encryption shared memory (900) as an encoded format if the core code calling message is transmitted thereto while the general codes are executed (S105);
a step in which the coprocessor (400) writes (S119) data of the core codes in the encryption shared memory (900) as an encoded format while the core codes are executed (S117); and
a step of the main processor (300) and the coprocessor (400) share the encoded data through the encryption shared memory (900).

## Patentansprüche

1. Mobile Vorrichtung, umfassend:
einen Hauptprozessor (300), der allgemeine Codes eines mobilen Anwendungsprogramms ausführt;
einen Coprozessor (400), der Kerncodes des mobilen Anwendungsprogramms ausführt; und
einen Coprozessortreiber (500), der zwischen dem Hauptprozessor (300) und dem Coprozessor (400) angeschlossen ist, um eine Kommunikation zwischen diesen zu ermöglichen,
wobei die allgemeinen Codes Befehle beinhalten, die auf dem Hauptprozessor (300) ausführbar sind, und
wobei die Kerncodes Befehle beinhalten, die auf dem Coprozessor (400) ausführbar sind,
**dadurch gekennzeichnet, dass** die mobile Vorrichtung ferner umfasst einen Kerncodespeicher (600), der die Kerncodes speichert und lediglich einen Zugriff durch den Coprozessor (400) zulässt,
wobei der Coprozessor (400) die Kerncodes getrennt von dem mobilen Anwendungsprogramm in dem Kerncodespeicher (600) speichert, wenn das mobile Anwendungsprogramm installiert wird.

2. Mobile Vorrichtung nach Anspruch 1, wobei auf ein Empfangen einer Kerncode-Aufrufnachricht von dem Hauptprozessor (300), der Coprozessortreiber (500) die Kerncode-Abrufnachricht an den Coprozessor (400) überträgt, ein Kerncode-Ausführungsergebnis von dem Coprozessor (400) empfängt und das empfangene Kerncode-Ausführungsergebnis anschließend an den Hauptprozessor (300) überträgt.

3. Mobile Vorrichtung nach Anspruch 2, wobei der Coprozessor (400) die Kerncodes aus dem Kerncodespeicher (600) lädt, wenn die Kerncode-Aufrufnachricht vom Coprozessortreiber (500) an diesen übertragen wird, und die geladenen Kerncodes anschließend ausführt.

4. Mobile Vorrichtung nach Anspruch 3, ferner umfassend
einen gemeinsam genutzten Verschlüsselungsspeicher (900), der Daten codiert und die codierten Daten freigibt,
wobei der Hauptprozessor (300) Daten der allgemeinen Codes in einem codierten Format in den gemeinsam genutzten Verschlüsselungsspeicher (900) schreibt, wenn die Kerncode-Aufrufnachricht an diesen übertragen wird, während die allgemeinen Codes ausgeführt werden, und
wobei der Coprozessor (400) die codierten Daten, die in den gemeinsamen Verschlüsselungsspeicher (900) geschrieben wurden, decodiert und sich auf die decodierten Daten bezieht.

5. Mobile Vorrichtung nach Anspruch 4, wobei der Coprozessor (400) Daten der Kerncodes in einem codierten Format in den gemeinsam genutzten Verschlüsselungsspeicher (900) schreibt, während die Kerncodes ausgeführt werden, und
wobei der Hauptprozessor (300) die codierten Daten, die in den gemeinsam genutzten Verschlüsselungsspeicher (900) geschriebenen wurden, decodiert und sich auf die decodierten Daten bezieht.

6. Mobile Vorrichtung nach Anspruch 1, wobei die Kerncodes durch einen Benutzer oder unter Verwendung einer zuvor auf einer mobilen Plattform definierten Funktion ausgewählt werden.

7. Ansteuerverfahren einer mobilen Vorrichtung, die einen Hauptprozessor (300), einen Coprozessor (400) und einen Coprozessortreiber (500), der eine Kommunikation zwischen dem Hauptprozessor (300) und dem Coprozessor (400) ermöglicht, beinhaltet, umfassend:
einen Schritt, in dem der Hauptprozessor (300) Kerncodes eines mobilen Anwendungsprogramms aufruft (S111), die Befehle umfassen, die auf dem Coprozessor (400) ausführbar sind;
einen Schritt, in dem der Coprozessortreiber (500) eine Kerncode-Aufrufnachricht von dem Hauptprozessor (300) empfängt (S111) und die Kerncode-Aufrufnachricht an den Coprozessor (400) überträgt (S113);
einen Schritt, in dem der Coprozessor (400), nach Ausführen (S117) der Kerncodes, ein Kerncode-Ausführungsergebnis an den Coprozessortreiber (500) überträgt (S121); und
einen Schritt, in dem der Coprozessortreiber (500) das Kerncode-Ausführungsergebnis an den Hauptprozessor (300) überträgt (S123),
**dadurch gekennzeichnet, dass** das Ansteuerverfahren, vor dem Schritt des Aufrufens der Kerncodes, ferner umfasst
einen Schritt, in dem der Coprozessor (400) die Kerncodes getrennt von dem mobilen Anwendungsprogramm in einen Kerncodespeicher (600) speichert (S103), wenn das mobile Anwendungsprogramm installiert wird.

8. Ansteuerverfahren nach Anspruch 7, wobei der Schritt des Aufrufens der Kerncodes beinhaltet:
einen Schritt, in dem der Hauptprozessor (300) allgemeine Codes des mobilen Anwendungsprogramms, die Befehle umfassen, die auf dem Hauptprozessor (300) ausführbar sind, ausführt (S105); und
einen Schritt, in dem der Hauptprozessor (300) eine Kerncode-Aufrufnachricht an den Coprozessortreiber (500) überträgt (S111), wenn bestimmt wird, dass die Kerncodes aufgerufen werden sollen.

9. Ansteuerverfahren nach Anspruch 8, ferner umfassend:
einen Schritt, in dem der Hauptprozessor (300) Daten der allgemeinen Codes in einem codierten Format in den gemeinsam genutzten Verschlüsselungsspeicher (900) schreibt (S109), wenn die Kerncode-Aufrufnachricht an diesen übertragen wird, während die allgemeinen Codes ausgeführt werden (S105);
einen Schritt, in dem der Coprozessor (400) Daten der Kerncodes in einem codierten Format in den gemeinsam genutzten Verschlüsselungsspeicher (900) schreibt (S119), während die Kerncodes ausgeführt werden (S117); und
einen Schritt des gemeinsamen Nutzens der codierten Daten durch den Hauptprozessor (300) und den Coprozessor (400) über den gemeinsam genutzten Verschlüsselungsspeicher (900).

## Revendications

1. Dispositif mobile, comprenant :
un processeur principal (300) qui exécute des codes généraux d'un programme d'application mobile ;
un coprocesseur (400) qui exécute des codes sources du programme d'application mobile ; et
un pilote de coprocesseur (500) qui est connecté entre le processeur principal(300) et le coprocesseur (400) afin de permettre une communication entre ces derniers ;
dans lequel les codes généraux incluent des commandes exécutables au niveau du processeur principal (300), et
dans lequel les codes source incluent des commandes exécutables au niveau du coprocesseur (400),
**caractérisé en ce que** le dispositif mobile comprend en outre un dispositif de mémorisation de code source (600) qui mémorise les codes source et permet simplement un accès du coprocesseur (400),
dans lequel le coprocesseur (400) mémorise le code source séparé du programme d'application mobile dans le dispositif de mémorisation de code source (600) lorsque le programme d'application mobile est installé.

2. Dispositif mobile selon la revendication 1, lors de la réception d'un message d'appel de code source provenant du processeur principal (300), dans lequel le pilote de coprocesseur (500) transmet le message d'appel de code source au coprocesseur (400), reçoit un résultat d'exécution de code source provenant du coprocesseur (400), et transmet ensuite le résultat d'exécution de code source reçu au processeur principal (300).

3. Dispositif mobile selon la revendication 2, dans lequel le coprocesseur (400) charge les codes source à partir du dispositif de mémorisation de code source (600) lorsque le message d'appel de code source est transmis à ce dernier à partir du pilote de coprocesseur (500), et exécute ensuite les codes source chargés.

4. Dispositif mobile selon la revendication 3, comprenant en outre :
une mémoire partagée de cryptage (900) qui code des données et partage les données codées,
dans lequel le processeur principal (300) écrit les données des codes généraux dans la mémoire partagée de cryptage (900) comme un format codé si le message d'appel de code source est transmis à ce dernier alors que les codes généraux sont exécutés, et
dans lequel le coprocesseur (400) décode les données codées écrites dans la mémoire partagée de cryptage (900) et fait référence aux données décodées.

5. Dispositif mobile selon la revendication 4, dans lequel le coprocesseur (400) écrit des données de code source dans la mémoire partagée de cryptage (900) comme un format codé alors que les codes source sont exécutés, et
dans lequel le processeur principal (300) décode les données codées écrites dans la mémoire partagée de cryptage (900) et fait référence aux données décodées.

6. Dispositif mobile selon la revendication 1, dans lequel les codes sources sont sélectionnés par un utilisateur en utilisant une fonction précédemment définie au niveau d'une plate-forme mobile.

7. Procédé d'attaque d'un dispositif mobile qui inclut un processeur principal (300), un coprocesseur (400) et un pilote de coprocesseur (500) permettant une communication entre le processeur principal (300) et le coprocesseur (400), comprenant :
une étape dans laquelle le processeur principal (300) appelle (S111) des codes source d'un programme d'application mobile, qui comprend des commande exécutables au niveau du coprocesseur (400),
une étape dans laquelle le pilote de coprocesseur (500) reçoit (S111) un message d'appel de code source provenant du processeur principal (300) et transmet (S113) le message d'appel de code source au coprocesseur (400) ;
une étape dans laquelle le coprocesseur (400) transmet (S121) un résultat d'exécution de code source au pilote de coprocesseur (500) après l'exécution (S117) des codes source ; et
une étape dans laquelle le pilote de coprocesseur (500) transmet (S123) le résultat d'exécution de code source au processeur principal (300),
**caractérisé en ce que** le procédé d'attaque comprend en outre, avant l'étape d'appel des codes source,
une étape dans laquelle le coprocesseur (400) mémorise (S103) les codes source séparés du programme d'application mobile dans un dispositif de mémorisation de code source (600) lorsque le programme d'application mobile est installé.

8. Procédé d'attaque selon la revendication 7, dans lequel l'étape d'appel des codes source inclut :
une étape dans laquelle le processeur principal (300) exécute (S105) des codes généraux du programme d'application mobile, qui comprennent des commandes exécutables au niveau du processeur principal (300) ; et
une étape dans laquelle le processeur principal (300) transmet (S111) un message d'appel de code source au pilote de coprocesseur (500) lorsque les codes sources sont déterminés être appelés.

9. Procédé d'attaque selon la revendication 8, comprenant en outre :
une étape dans laquelle le processeur principal (300) écrit (S109) des données des codes généraux dans la mémoire partagée de cryptage (900) comme un format codé si le message d'appel de code source est transmis à ce dernier alors que les codes généraux sont exécutés (S105) ;
une étape dans laquelle le coprocesseur (400) écrit (S119) les données de code source dans la mémoire partagée de cryptage (900) comme un format codé alors que les codes source sont exécutés (S117) ; et
une étape où le processeur principal (300) et le coprocesseur (400) partagent des données codées par l'intermédiaire de la mémoire partagée de cryptage (900).
